# EUROPEAN PATENT SPECIFICATION

(11) **EP 4 528 476 B1**
(45) Date of publication and mention of the grant of the patent: **11.11.2026**
(21) Application number: 23199098.7
(22) Date of filing: 22.09.2023
(51) Int. Cl.: G06F 3/16, G10L 15/22, G10L 25/63

(54) **HUMAN-MACHINE INTERACTION METHOD AND COMPUTING SYSTEM**
MENSCH-MASCHINE-INTERAKTIONSVERFAHREN UND COMPUTERSYSTEM
PROCÉDÉ D'INTERACTION HOMME-MACHINE ET SYSTÈME INFORMATIQUE

(43) Date of publication of application: 26.03.2025
(73) Proprietor: TOYOTA JIDOSHA KABUSHIKI KAISHA, Toyota-shi, Aichi-ken, 471-8571 (JP)
(72) Inventor: ABDELKAWY, Hazem, 1140 BRUSSELS (BE); DE WESER, Marleen, 1140 BRUSSELS (BE)
(74) Representative: Cabinet Beau de Loménie

(56) References cited:
- US-A1- 2021 191 506
- US-A1- 2022 121 867

## Description

### BACKGROUND OF THE INVENTION

### 1. Field of the Invention

The invention relates to the technical field of human-machine interaction, and in particular, to a human-machine interaction method, a computing system, a computer program product, and a computer-readable storage medium.

### 2. Description of Related Art

In the ever-evolving realm of human-machine interaction, technology continuously strives to make machines more intuitive and responsive to human emotions. For example, the Chinese patent application publication number CN115641837A describes a robot that analyzes users' facial microexpressions, heartbeat, and voice tone to discern emotions. As another example, the Chinese patent application publication number CN115431288A introduces a guidance robot for medical consultations, equipped with LED lights, display screens, and a rotating head to interact and provide feedback based on voice dynamics, video images, and body movements. Additionally, US patent publication number US 2021/0191506 describes an affective interaction apparatus configured to receive emotion-related data and an emotion state of a user and identify a user intention based on the emotion-related data and the emotion state.

While these patents highlight considerable advancements, there remains room for improvement.

### SUMMARY OF THE INVENTION

The invention is defined by the appended claims. A first embodiment of the present disclosure is directed to a human-machine interaction method. The method is implemented by a computing system. The method includes a step of using the language model to determine whether a current state of a user meets a preset criteria based on current user data associated with physical action(s) of the user during a current interaction session between the user and a machine. The machine may or may not be included in the computing system. If the result of the determination indicates that the current state of the user meets the preset criteria, the system obtains data representing an environmental condition contributing to a target user state that is different from the current user state. The data representing the environmental condition is obtained from data associated with a past interaction session between the user and a machine. This machine may or may not be included in the computing system. It may be the one engaged in the current interaction session or it may be a different machine.
Subsequently, based on current environmental data that is associated with a current environment where the user is located during the current interaction session, the system uses the language model to determine an action to be performed by a device in the current environment to achieve or approximate the environmental condition, and then sends a command to enable the device to perform the action. The device to perform the action may or may not be included in the system. It may be the machine engaged in the current or past interaction session, or it may be a different machine. For example, the two machines are user devices such as a smartphone and a wearable device, the computing system is a high-performance computer, and the device to perform the action is an Internet-of-Things (hereinafter "IoT") device such as an air conditioner.

The language model may be stored in and run by the computing system. Or, the language model may be stored remotely. The computing system may interact with the remote language model through remote calls or application programming interface (hereinafter "API") requests.

The term "interaction session" refers to a continuous period during which the user engages with a concerned machine, even if there aren't continuous exchanges throughout the entire duration. An interaction session may be defined in different ways. For example, it may begin when the user engages a human-machine interaction feature of the concerned machine, such as pressing a button or inputting a message. Or, it may commence after the system's response to input data associated with a previous interaction session, by enabling a device to perform an action to adjust an environmental condition or by rendering a message for the user. The input data includes user data associated with physical action(s) of the user during the previous interaction session and environmental data associated with the environment. On the other hand, an interaction session may conclude when the user exits, when the interaction feature is deactivated by the user, after a period of inactivity, or, after the system responds to input data associated with the interaction session. In another scenario, an interaction session may have a predetermined duration.

As can be appreciated, the term "based on" used herein refers to "based at least partially on". In addition, unless otherwise stated, the term "or" used herein means "and/or".

A language model is a probabilistic model of a natural language that can process and generate text in the natural language. Further, a language model inherently possesses a certain level of verbal reasoning abilities, which typically involve the abilities of understanding and analyzing written information and then reasoning from that information to answer questions, make predictions, come to conclusions, etc. The verbal reasoning abilities can be further directed or enhanced with the guidance of prompt engineering. Consequently, the method is capable of processing verbal messages input by the user while deriving an action that can be taken to affect the current environment of the user to improve the current user state based on one or more natural language descriptions representative of the user and the user's environment. The language model can be a recurrent neural network-based language model, a transformer network-based model, and etc.

As can be appreciated, the current environmental data may indicate that the device is in the current environment.

As used herein, the term "environment" specifically refers to a physical or spatial setting instead of a digital, virtual or social one, and may refer to the immediate environs of the user during a given interaction session. The terms "environmental condition" and "condition" of a specific environment herein each refer to a physical attribute of a concerned environment. It may include ambient temperature, humidity, lighting, sound/acoustics (e.g., noise level or ambient music), air quality, spatial arrangement (e.g., the layout and organization of objects and spaces within the concerned environment, including positions of different objects), the odor, the physical positions of people in the environment, and etc. The physical positions of objects (such as a human or a device) may be expressed as global positions, such as the global positioning system ("GPS") coordinates, or geographical locations. Alternatively, these positions may be defined relative to a specific reference point in the environment, such as the user.

Determining that the current state of the user meets the preset criteria may represent that the current user state is unfavorable or requires improvement. Accordingly, compared to the user's current state, the target state represents an improvement. For example, the current user state may be negative, potentially harmful to user health, or may pose imminent risks. The target state may be a positive or neutral state.

As such, when determining that a current state of a user meets the preset criteria, the proposed method adjusts an environmental condition in the current location of the user according to data collected from a past interaction session that the user engaged in, thereby providing a personalized solution to improve the user state, which can be more effective than standardized solutions.

The proposed method is applicable to various scenarios and is primarily intended to protect user safety, improve user health and wellbeing, or increase work efficiency. For example, a health support system, an autonomous driving system, or an industrial robotics system used in manufacturing and production settings may include the computing system. Moreover, the proposed method is able to improve user experience.

In a variant of the first embodiment, the language model is an artificial intelligence model that has been developed using deep learning techniques. That is, the training process, architecture, and optimization of the model are based on deep learning methodologies. In particular, the language model may be a large language model (hereinafter "LLM"), like OpenAI's Generative Pretrained Transformer (hereinafter "GPT") series, Meta AI's Large Language Model Meta AI (hereinafter "LLaMA") series, etc. An LLM is a deep learning algorithm that can recognize, summarize, translate, predict and generate text and other forms of content based on knowledge gained from massive datasets.

In another variant of the first embodiment, the current user data or the current environmental data is included in a natural language description of the current interaction session. Or, the data associated with the past interaction session is a natural language description of the past interactions session. This could enhance the efficiency of the method.

In still another variant of the first embodiment, the current state and target state of the user are mental or affective states, which may include states that can be described as sleepy, tired, stressed, happy, and etc. Or, they may be physiological states (e.g., awareness level, stress level).

In still another variant, the current user data includes the content of a verbal message input by the user, data representing a physiological state of the user, data representing an emotional state derived from an expressive behavior of the user, data representing an affective display exhibited by the user, or data representing a physical action performed by the user.

In particular, the verbal message may be any piece of information or instruction that the user provides to the concerned machine for the purpose of communication or command. It can be input using diverse methods, including typing, speaking, filming, or selecting a preset message displayed on the screen of the machine interacting with the user. Additionally, it can take the form of text, video, or audio.

As such, the content of the verbal message may be the message in its original or a converted form. For instance, the message is a voice input while the content of the message is the written text that results from converting the voice input using speech recognition technology.

A physiological state refers to the value(s) of a physiological parameter, like heart rate, skin temperature, and skin conductance, or to a composite state such as awareness level or stress level that is derived from one or more physiological parameters by using a machine learning model.

An expressive behavior refers to an action consciously or unconsciously communicating emotions, desires, intents, and/or personality. Examples thereof include facial expressions, body language, voice tone and pitch. In particular, the expressive behavior may be a micro-expression, which is defined as a facial expression that lasts less than 0.5s.

An affective display refers to a form of non-verbal communication in which an emotion or affect is communicated, including facial expressions, gestures, body language, volume and tone of voice, laughing, crying, etc. It is noted that an affective display may also be an expressive behavior.

The various types of data described above could facilitate the understanding of the user's current state.

In still another variant, the current environmental data includes data representing a physical action, location, state, or trajectory of an object in the current environment, data representing an event occurring in the current environment, or data representing a condition of the current environment. The object may refer to a person, a device, an article, or any other that is different than the user. It may be dynamic or static. As an example, the location or trajectory of the object may be described relative to the location or trajectory of the user. The state of a device may include mode of operation, configuration state, operational state, and etc.

In still another variant, the method further includes a step of obtaining, using sensor(s) or user input device(s), raw user data representative of the user during the current interaction session, a step of obtaining raw environmental data representative of the current environment, and a step of obtaining the current user data and the current environmental data based on the raw user data and the raw environmental data, respectively. In particular, the raw environmental data is obtained by using sensor(s), or is received from device(s) acting upon the current environment.

Examples of a sensor for capturing the raw user data or the raw environmental data include an RGB camera, a microphone, a depth camera, a heart rate sensor, an electrodermal activity sensor, a motion sensor, an accelerometer, a thermometer, etc. Examples of a user input device for receiving the raw user data include a keyboard, a microphone, a touch screen, etc.

Specifically, the step of obtaining the current user data based on the raw user data may include a step of deriving, using a machine learning model, data identifying an emotional state, an affective display, or a physiological state of the user based on the raw user data, and a step of obtaining the current user data by transforming the data identifying the emotional state, the affective display, or the physiological state of the user to a natural language description or a part of a natural language description.

The emotional state may represent a modality-specific emotion derived from a single modality (meaning one type or method of emotion detection), such as facial expression, voice, speech, text, or physiological measures like heart rate or skin conductivity. Alternatively, it may represent a composite emotional state estimated by a multimodal emotion recognition model that integrates emotions from individual modalities. The data identifying the emotional state may include a numerical score or probability indicating the likelihood of the emotional state, a class identifier representing the emotional state, or other structured data representations.

The data identifying a physiological state of the user may include a composite state derived by a machine learning model from values of multiple physiological parameters, or a modality-specific state derived by a machine learning model from the value of one physiological parameter.

Alternatively or additionally, the step of obtaining the current environmental data includes a step of obtaining, based on the raw environmental data, a scene graph of a scene the user faces during the current interaction session, or data representing an acoustic event occurring in the current environment, and a step of obtaining the current environmental data by transforming the scene graph or the data representing the acoustic event to a natural language description or a part of a natural language description.

The scene graph may include nodes representing objects in the current environment and edges between nodes representing a relationship (e.g., the distance) between them. An example method for obtaining a (updated) scene graph is described in the European Patent Application No. 22208898.1 at the description and the drawings. The scene graph indicates the positions of different objects in the environment. The data representing the event may be obtained by using an acoustic event detection or classification model, which may be a machine learning model. Such a model may be configured to identify or categorize audio events within an audio stream or recording.

Note that though they are described separately, the transforming step for obtaining the current user data and the current environmental data may be implemented together using a single segment of code, as described in the Detailed Description section below.

The transforming step for obtaining the current user data or the current environmental data that is described above may be implemented through a knowledge representation process.

In still another variant, the raw environmental data is obtained using a camera or a microphone directed to the current environment.

In still another variant, the step of determining whether the current state of the user meets the preset criteria based on the current user data includes a step of determining the current state of the user based on the current user data.

In particular, the language model may determine the current state of the user based on the current user data and the current environmental data. It may even take into account of data associated with a previous interaction session, such as previous environmental data associated with a previous environment where the user is located during the previous interaction session. By taking into account environmental data associated with the user's environment, the language model can more accurately estimate the current user state. For example, the language model may discern whether a smile on the user's face signifies genuine happiness or sarcasm, by taking into account potential causes to the smile from the user's environment: if a driver stops to allow a pedestrian to cross, and the pedestrian acknowledges with a wave, the driver's subsequent smile is likely one of happiness. However, if the pedestrian insults the driver and a smile still appears, it may be one of sarcasm.

As an example, the current user state may be determined by using a knowledge ontology.

The knowledge ontology enables to link different concepts. In the context of the invention, the ontology enables to link the states of the user with events that could be the causes of the user states. For instance, following the ontology https://conceptnet.io/c/en/emotion (September 2023), the emotion anger is linked with "being insulted" or "listening to the radio" with a causal relationship.

In still another variant, the step of determining whether the current user state meets the preset criteria includes determining whether the current user state meets the preset criteria by using a sentiment analysis technique. Sentiment analysis is a natural language processing technique used to determine the sentiment expressed in a piece of text, which herein refers to the current user data or text representing the determined current state of the user. The sentiment analysis technique may classify the polarity of the text, such as whether it's positive, negative, or neutral. Alternatively or additionally, it may identify the strength of the sentiment or categorize sentiments into more specific states (e.g., happy, angry, etc.).

Further, the sentiment analysis technique may take into account the current environmental data when determining the sentiment. For example, the user being sleepy might be negative in a work context but neutral or even positive in a bedtime context.

In still another variant, the method further includes a step of using the language model to determine one or more contributing factors to the current state of the user based on the current user data or the current environmental data. The one or more contributing factors may be determined using a knowledge ontology, such as the one mentioned above. For each of the contributing factor(s), the system may further estimate a probability of the factor contributing to the current user state.

As an example, the system uses the language model to determine semantic similarity between the current environmental data and the potential causes to the current user state that are listed in a knowledge ontology to determine the contributing factor(s).

In still another variant, the step of obtaining the data representing the environmental condition from data associated with the past interaction session includes obtaining a set of data representing various environmental conditions. The data representing the environmental condition contributing to the target user state is included in the set of data. The method further includes a step of using the language model to determine the environmental condition as a contributing factor to the target user state.

In still another variant, the data associated with an interaction session (e.g., the past interaction session or the current interaction session) includes: user data associated with one or more physical actions of the user during the interaction session, environmental data associated with the environment where the user is located during the interaction session, data representing one or more user states, data identifying one or more contributing factors to one or more user states, or data representing a probability of each of the factor(s) contributing to the user state(s). The one or more user states may include a user state during the interaction session, or a user state that is irrelevant to the user state during the interaction session and is implicitly or explicitly indicated by the content of a verbal message input by the user during the interaction session. For example, the user message is "I like swimming", the user state implied by the message is "happy", and the contributing factor to the user state is "swimming".

In still another variant, in the past environmental session, the environmental condition is determined as a contributing factor to the target state.

In still another variant, the method further includes a step of storing data associated with the current interaction session in a database. The database may be stored in the computing system. Or, the database may be stored remotely, and the computing system sends the data to the database for storage.

In still another variant, the step of obtaining the data representing the environmental condition includes: formulating, using the language model, a query based on the current state of the user; sending the query to a database storing the data associated with the past interaction session; and receiving the data representing the environmental condition from the database in response to the query. The database may be the same one as describe above. It may be one that is able to perform similarity searches. Utilizing the database allows the system to access extensive historical user data.

As an example, the database is a vector database. The system uses the language model to formulate the query in the natural language, the database or an embedding model converts the query into a query vector, and then the database retrieves the most similar vectors to the query vector from the database based on a distance metric (e.g., cosine similarity or Euclidean distance). The database returns the original text associated with each of the retrieved vectors (i.e., the text from which the retrieved vector was converted) to the language model.

The query may describe the current state of the user. For instance, the query may request solutions to improve the current user state. Or, the language model may determine the target state and the query may (further) describe the target state. To increase the efficiency of the method, the query may further describe one or more conditions of the current environment.

In still another variant, the step of determining the action to be performed by the device includes using the language model to determine that a user state induced by the environmental condition is desirable in the context of the current interaction session (e.g., based on the current user data and the current environmental data), or determine that the environmental condition is achievable or can be approximated based on the current environmental data. The term "target state" herein refers to a state that is determined as desirable by the system using the language model.

In addition to or as an alternative to the variant above, the step of determining the action to be performed includes prioritizing the environmental condition based on the probability of it contributing to the target state of the user.

In still another variant, the method further includes a step of using the language model to generate a message to be rendered for the user, where the message includes a suggestion on the action to be performed by the device. The step of sending the command is performed after receiving confirmation from the user. The message can be rendered in various ways, including audio, video, image, and text, among others.

In still another variant, the method further includes a step of obtaining, from the data associated with the past interaction session, data representing an action of the user that contribute to the target user state, and a step of using the language model to generate a message to be rendered for the user, which includes a suggestion on the action.

In still another variant, the method further includes a step of using the language model to determine a personality of the user based on the data associated with the past interaction session. The action to be performed by the device is determined further based on the determined personality.

In particular, this step may be performed based on data associated with multiple past interaction sessions. Or, the step may be performed if the language model does not have access to any previously determined personality of the user, or a previously determined personality of the user has reached its timeout.

In still another variant, each of the various steps mentioned above that are implemented by using the language model is implemented by: sending one or more prompts to the language model (and any relevant data) to guide the language model to perform the concerned step, and receiving the result generated by the language model after performing the concerned step. In particular, the prompt(s) may be sent by using a prompt engineering algorithm. Or, the sending and receiving step may be performed by using the prompt engineering algorithm.

A prompt engineering algorithm guides the interaction with language models (especially LLMs) through structured prompts. As an example, the prompt engineering algorithm may be an implementation that utilizes the ReAct methodology introduced by Shunyu Yao et al. in their paper titled "ReAct: Synergizing Reasoning and Acting in Language Models" (version 3, updated on 10 March 2023, accessible at https://arxiv.org/abs/2210.03629).

In particular, different contexts or background information may be provided by the prompt engineering technique to the language model when performing the various steps. For example, the language model may be asked to act as an expert in psychology when determining the current user state, to act as a detective when determining the action to be performed by a device in the current environment, and to act as a chatbot when generating a message to be rendered for the user.

Alternative to using prompt engineering to guide the language model, the language model may be trained to perform the various steps. For example, it may be trained by using the expert trajectories mentioned in the paper above.

In still another variant, prior to determining whether the current state of the user meets the preset criteria based the current user data, the method further includes a step of receiving the current user data and the current environment data. This step may be implemented by the language model or by the prompt engineering algorithm.

It is noted that, unless otherwise stated, variants or examples described herein are compatible with other variants or examples.

A second embodiment of the present disclosure is directed to a computer program product including instructions which, when executed by one or more processors, enable the one or more processors to perform the method according to the first embodiment.

This program product can use any programming language and take the form of source code, object code or a code intermediate between source code and object code, such as a partially compiled form, or any other desirable form.

In a variant of the second embodiment, the computer program product further includes a software implementation of the prompt engineering algorithm described above.

In another variant of the second embodiment, the computer program product further includes the configuration of the language model. The configuration encompasses the structural and operational details of the model, which may include the number of layers in the network, the number of nodes or units in each layer, the type of mechanisms used (like self-attention), activation functions, training-related parameters such as learning rate and batch size, and the learned weights and biases.

A third embodiment of the present disclosure is directed to the computing system. The computing system includes one or more processors, and one or more computer-readable storage media storing the computer program product according to the second embodiment.

A fourth embodiment of the present disclosure is directed to a computer-readable storage medium containing the computer program product according to the second embodiment. The storage medium may be non-transitory.

The storage medium can be any entity or device capable of storing the program. For example, the medium can include storage means such as a ROM, for example a CD-ROM or a microelectronic circuit ROM, or magnetic storage means, for example a diskette (floppy disk) or a hard disk.

Alternatively, the storage medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flow chat of a human-machine interaction method according to an example 100 of the first embodiment of the disclosure;
FIG. 2 is a schematic diagram of a computing system 200 according to one or more embodiments of the disclosure; and
FIG. 3 is a schematic diagram of a computing system 300 according to one or more embodiments of the disclosure.

### DETAILED DESCRIPTION OF EMBODIMENTS

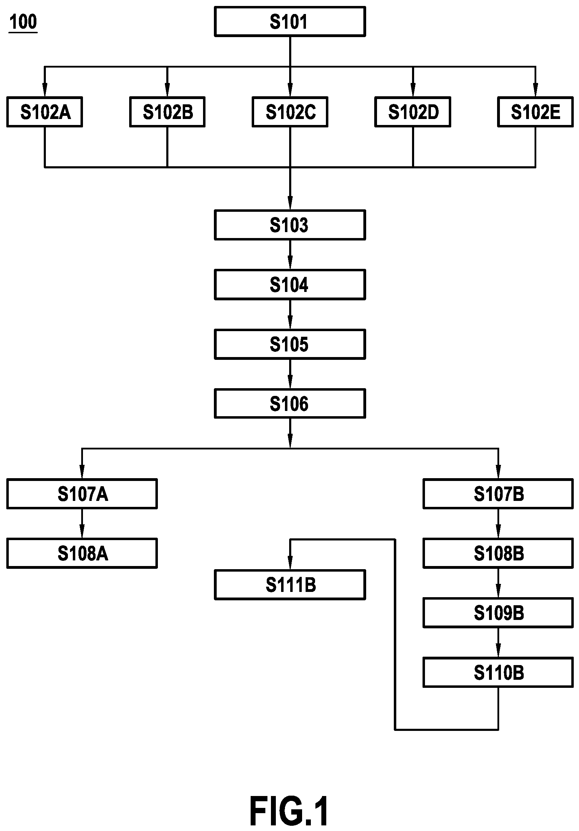

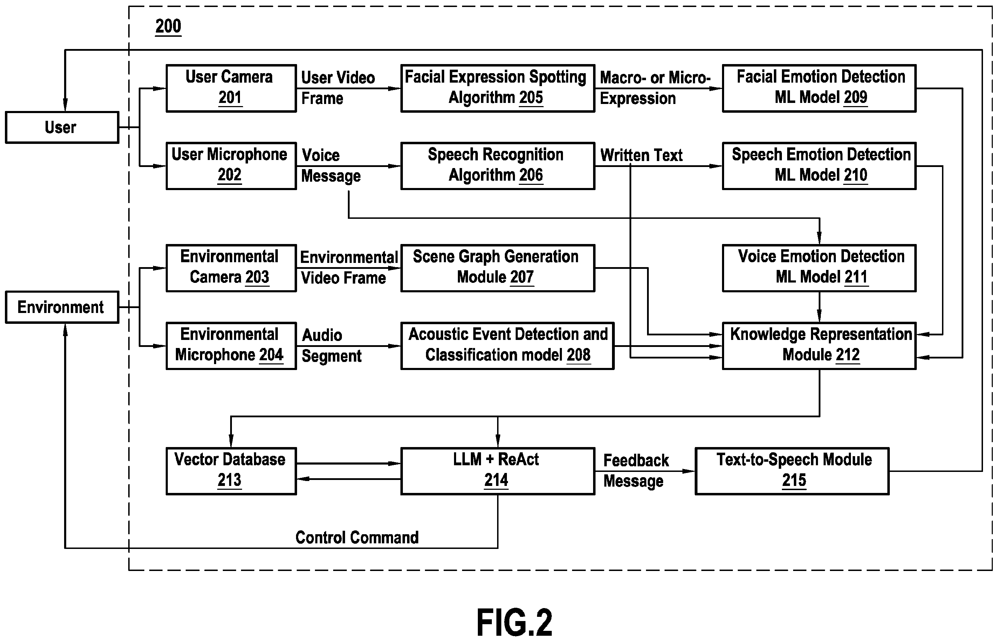

Fig. 1 illustrates the workflow of a human-machine interaction method according to an example 100 of the first embodiment of the disclosure. The method is implemented by the computing system 200 as illustrated by Fig. 2.

The system 200 includes user sensors configured to capture raw user data representative of the user, and environmental sensors configured to capture raw environmental data representative of the environment where the user is located. The user sensors are represented by the user camera 201 and the user microphone 202 that are directed towards the user. The environmental sensors are represented by the environmental camera 203 and the environmental microphone 204 that are directed towards the space around the user.

The example method 100 includes multiple iterations, each being implemented during an interaction session between a user and a user device (not shown) in the system 200. The user may interact with various user devices across different interaction sessions. However, for simplicity, this example depicts the user engaging with the same user device in separate interaction sessions. In addition, in this example, the user device includes the user camera 201 and the user microphone 202.

In this example, the interaction session is one that begins when the user initiates interaction, either by inputting a verbal message or through a non-verbal action like pressing a button or touching a screen. Regardless of how the session starts, it always includes a single verbal message from the user. The session concludes when the system 200 responds to this message, by acting upon the environment, or providing a feedback message to the user.

Each iteration of the example method 100 includes the following steps S101- S106, S107A, S108A, and S108B-S111B.

At step S101, the user camera 201 records a video of the user, the user microphone 202 captures a voice message from the user, the environmental camera 203 records a video of the current environment where the user is located during the current session, and the environmental microphone 204 records an audio segment of sound in the current environment.

The system 200 further includes a facial expression spotting algorithm 205 and a facial emotion detection machine learning model 209. At step S102A, the facial expression spotting algorithm 205 processes the user video to spot macro- or micro-expressions exhibited by the user, and the facial emotion detection machine learning model 209 classifies each of the spotted macro- or micro-expressions of the user into an emotion, such as "happiness", "sadness", "surprise", "fear", "anger", "disgust" and "contempt".

A macro-expression (also known as a regular facial expression) lasts from 0.5 to 4s and has higher intensity. A micro-expression occurs in less than 0.5s and has lower intensity. The facial expression spotting algorithm 205 may be a machine learning model such as the two-stream 3D-CNN model proposed by C. H. Yap et al. in their 2022 paper titled "3D-CNN for Facial Micro- and Macro-expression Spotting on Long Video Sequences using Temporal Oriented Reference Frame". This was presented in the Proceedings of the 30th ACM International Conference on Multimedia (MM '22), published by the Association for Computing Machinery, New York, NY, USA, pages 7016-7020. The DOI for the paper is https://doi.org/10.1145/3503161.3551570. The facial emotion detection machine learning model 209 may identify emotions from facial expressions using either video frame(s) with the most intense expression (such as an apex frame) among a series of video frames corresponding to a facial expression, or the entire series of video frames.

While the example method 100 uses a facial expression spotting algorithm 205 to detect the facial expressions of the user, this task can alternatively be performed by humans, such as trained facial action coding system ("FACS") coders.

The system 200 further includes a speech recognition algorithm 206, and a speech emotion machine learning model 210. At step S102B, the speech recognition algorithm transcribes the voice message into written text, and the speech emotion machine learning model 210 processes the written text to recognize and classify emotion(s) expressed by the written text.

The system 200 further includes a voice emotion detection machine learning model 211 which, at step S102C, extracts acoustic features such as tone, pitch, intensity, speed and other characteristics of the user's voice from the voice message, and then recognizes and classifies the emotions expressed by the acoustic features.

The system 200 further includes a scene graph generation module 207 which, at step S102D, processes the video of the current environment to detect and track objects which could be humans, animals, or any other entities. It then creates or updates a scene graph of the current environment based on the processing result. The scene graph indicates the positions of different objects in the current environment. For moving objects, the scene graph may further include a trajectory of the objects.

The term "module" herein can refer to either a software component, a hardware component, or a combination of software and hardware.

The system 200 further includes an acoustic event detection and classification model 208 which, at step S102E, processes the audio segment of the environmental sound to detect and classify acoustic events happening in the current environment.

The system 200 further includes a knowledge representation module 212 which, at step S103, converts the processing results of the steps S102A-S102E to a natural language description of the current interaction session. The natural language description may further describe the time point when the verbal message is received, personal information of the user, such as a client number, gender, and ethnicity, the location of the user (such as the GPS coordinates) . The personal information of the user may be input by the user, or obtained by using a machine learning model processing the user video.

The system 200 further includes a vector database 213 and an LLM 214.

The LLM 214 may be Google's PaLM 2^{®}, OpenAI's GPT-4^{®}, Anthropic's Claude v1^{®}, TII's Falcon^{®}, or any other LLM. The LLM is configured to co-operate with a software component that orchestrates the interaction between the LLM 214 and its environment (such as the vector database 213, the knowledge representation module 212, the internet, or other data sources). In particular, this software component is configured to follow the ReAct methodology to guide the LLM in its reasoning process. For instance, this software component is the ReAct agent implementation provided by Langchain.

At step S104, the knowledge representation module 212 transmits the natural language description of the current interaction session to the vector database 213 for storage and to the ReAct agent for further processing.

The vector database may be Chroma^{®} (e.g., version 0.4.10 in September 2023). The database converts the natural language description to an embedding and then stores the embedding and the natural language description. Prior to the step S104, the vector database stores therein natural language descriptions of past interaction sessions between the user and the system 200.

In particular, a high-level task may be provided to the ReAct agent to guide the LLM 214 in the following steps S106, S107A, S107B, and S109B. The ReAct agent handles the detailed prompting process, guiding the LLM214 through the reasoning and action sequence to solve the task. Further, the way the ReAct agent interacts with the LLM 214 may be customized or fine-tuned, e.g., by proving specific prompts to the ReAct agent.

At step S105, the LLM 214 receives the natural language description from the ReAct agent.

At step S106, the LLM 214 determines whether a current state of the user is negative in the context of the current interaction session based on the natural language description.

If the result of the determination indicates that the current user state is neutral or positive in the context of the current interaction session, then the method proceeds to step S107A, where the LLM 214 determines one or more contributing factors to the current user state. At the subsequent step S108A, the ReAct agent updates the natural language description of the current interaction session by requesting the database 213 to incorporate the one or more contributing factors and the current user state into the natural language description of the current interaction session. For example, the ReAct agent may send another natural language description generated by the LLM 214 that describes the one or more contributing factors and the current user state to the database 213. The LLM 214 may further determine a probability of each of the factor(s) contributing to the current user state and include the one or more probabilities into the other natural language description mentioned above. The contributing factor(s) includes an environmental condition or an action taken by the user.

Otherwise if the result of the determination indicates that the current user state is negative in the context of the current interaction session, then the method proceeds to step S107B, where the LLM 214 formulates a query requesting solutions to improve the current user state under one or more current environmental conditions. At the subsequent step S108B, the ReAct agent sends the query to the database 213, then receives from the database 213 natural language descriptions related to a positive user state, and feeds these natural language descriptions into the LLM 214. For example, the natural language descriptions may describe contributing factors to various positive user states. The contributing factors include environmental conditions and activities of the user.

At the subsequent step S109B, the LLM 214 determines a device action to be performed by a device (not shown) in the current environment and a user action to be performed by the user based on the natural language descriptions received from the database 213 at the step S108B. The device is part of the system 200.

For instance, the LLM 214 may select from the natural language descriptions multiple contributing factors to user states that are desirable in the context of the current interaction session, and then select from these contributing factors some contributing factors that are achievable/feasible in the context of the current interaction session. The LLM 214 further prioritizes these factors according to their probabilities of contributing to the user states, or the levels of difficulty in achieving/reproducing the contributing factors. Then the LLM 214 determines one or more action to be performed by device(s) in the system 200 or by the user based on the priorities of the contributing factors.

Subsequently, at the step S110B, the ReAct agent sends a control command that is generated by the LLM 214 to enable the device to perform the device action, and sends a feedback message that is generated by the LLM 214 and suggests on the user action to a text-to-speech module 215 of the system 200. At step S111B, the text-to-speech module 215 converts the feedback message to an audio message, and a speaker (not shown) of the system 200 plays the audio for the user.

The ReAct agent further updates the stored natural language description of the current interaction session by requesting the data base 213 to incorporate the control command and the feedback message into the natural language description of the current interaction session.

In addition, the LLM 214 may determine a personality of the user based on natural language descriptions of past interaction sessions, which may be all the past interaction sessions between the system 200 and the user or past interaction sessions from a recent period. Consequently, the step S106, S107A, or S109B may be performed based on the determined personality. The determination of the personality may be performed if the current interaction session is the first one in a conversation between the user and the computing system. The conversation terminates when the user actively ends it, or after a period if inactivity.

The different components 201-215 of the system 200 can either be housed within a single computing device, such as a robot, or be part of standalone electronic devices. These electronic devices can include a high-performance computer, a server, a user device (e.g., a laptop computer, a home desktop computer, a mobile device such as a tablet, a smart phone, a wearable device, etc.), an embedded device (e.g., a device embedded within a vehicle, a camera, an image sensor, a household appliance, etc.), a platform having one or more corresponding "APIs", a cloud infrastructure, and etc.

The example method 100 is further illustrated below with an example scenario.

In this scenario, the computing system 200 is an autonomous driving system. The natural language description of the current interaction session received by the LLM 214 at step S105 is as follows: "Sensors detected a rapid deceleration event, correlating with the visual input of a large tiger emerging abruptly from the roadside forest onto the car's trajectory. The on-board camera system, monitoring the driver, noted an immediate facial reaction consistent with shock: eyes widened, forehead skin tension increased, and mouth slightly agape. Concurrently, steering wheel sensors recorded an intensified grip. The onboard microphone registered the driver's urgent query to the system, 'What should I do?' Ambient environmental audio sensors captured a significant spike in tire friction and the vehicle's horn."

At step S106, the LLM 214 determines that the driver exhibits clear signs of acute stress and sudden panic, but still actively seeking guidance. It also determines that the cause to the current user state is the unexpected appearance of a large tiger emerging abruptly from the roadside forest onto the car's trajectory.

The LLM 214 then formulates the following query: 'driver in a state of acute stress and sudden panic due to unexpected road hazard, urgently seeking guidance on immediate actions.'

The ReAct agent sends the query to the database 213 and receives the following returned message: "Claude Debussy's 'Clair de Lune' always sooths me", "my driving instructor used to tell me that if I hit an unexpected obstacle, I should apply the brake firmly and evenly. An abrupt application of the brake can cause the vehicle to skid", and "the user is reassured after being directed to the nearest rest area". The LLM 214 determines that playing 'Clair de Lune' is an achievable environmental condition and that directing the user to the nearest rest area could be beneficial in the current situation.

Then the car's audio system plays the following voice message: "You seem stressed. Would you like to listen to Claude Debussy's "Clair de Lune", finds a rest area, or both?" Depending on the driver's response, the system 200 plays "Clair de Lune", guides the user to the nearest rest area, or does both sequentially.

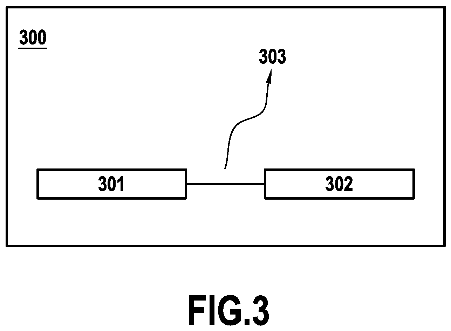

Fig. 3 illustrates the block diagram of a computing system 300 according to an example of the second embodiment of the disclosure. The computing system 300 is configured to implement the method according to various examples/variants of the first embodiment, including the example 100. The computing system 300 includes one or more processors 301, and one or more non-transitory storage media 302 storing instructions which, when executed by the one or more processors (301), enable the processor(s) to perform the method.

Examples of the processor(s) 301 include a central processing unit (hereinafter "CPU"), a vision processing unit (hereinafter "VPU"), a graphics processing unit (hereinafter "GPU"), a tensor processing unit (hereinafter "TPU"), a neural processing unit (hereinafter "NPU"), a neural processing engine, an application processor, a display controller, an application specific integrated circuit (hereinafter "ASIC"), and a field programmable gate array (hereinafter "FPGA"). Examples might also encompass a core of any of the aforementioned units, a coprocessor, or any other hardware configured for processing functions. Furthermore, a processor 301 may be embedded within another hardware component, such as an image sensor.

A storage medium 302 can be any medium accessible by a processor 301, whether in volatile or non-volatile form. Examples thereof include a volatile memory such as random access memory (hereinafter "RAM"), dynamic random access memory (hereinafter "DRAM"), and static random access memory (hereinafter "SRAM"), a non-volatile memory such as a magnetic hard disk, a optical disk, a floppy disk, a flash memory, an electrically programmable memory (hereinafter "EPROM"), and an electrically erasable and programmable memory (hereinafter "EEPROM").

The processor(s) 301 and the computer-readable storage media (302) may be directly or indirectly coupled to each other, either physically, communicatively, or operationally via one or more communication channels 303. Examples of a communication channel 303 include a bus (such as an address bus or a data bus), a network connection, an inter-process communication data structure, or any other means for communicating data.

The computing system 300 may be the same as the computing system 200. Or, some of the components of the system 200, such as the database 213 or the device that performs the device action, may not be included in the computing system 300. Further, the computing system 300 may include ReAct agent but do not include the LLM.

## Claims

1. A human-machine interaction method (100) implemented by a computing system (300), the method comprising steps of:
determining (S106), by using a language model, whether a current state of a user is a negative state based on current user data associated with one or more physical actions of the user during a current interaction session between the user and a machine;
if a result of the determining (S106) step indicates that the current state of the user is a negative state, performing following steps:
- obtaining, from data associated with a past interaction session between the user and a machine, data representing an environmental condition contributing to a target state of the user that is different from the current state;
- determining (S109B), by using the language model, an action to be performed by a device in a current environment where the user is located during the current interaction session to achieve or approximate the environmental condition based on current environmental data associated with the current environment, wherein the step (S109B) of determining the action comprises: using the language model to determine that the environmental condition is achievable or can be approximated based on the current environmental data, and prioritizing the environmental condition based on a probability of it contributing to the target state of the user; and
- sending (S110B) a command to enable the device to perform the action.

2. The method according to claim 1, wherein
- the language model is an artificial intelligence model that has been developed using deep learning techniques; or,
- the current user data or the current environmental data are included in a natural language description of the current interaction session, or, the data associated with the past interaction session is a natural language description of the past interaction session; or,
- the current user data comprises:
∘ content of a verbal message input by the user,
∘ data representing an emotional state derived from an expressive behavior of the user,
∘ data representing a physiological state of the user;
∘ data representing an affective display exhibited by the user, or
∘ data representing a physical action performed by the user; or,
- the current environmental data comprises data representing:
∘ a physical action, location, state, or trajectory of an object in the current environment,
∘ an event occurring in the current environment, or
∘ a condition of the current environment.

3. The method according to claim 1 or 2, further comprising:
obtaining (S101), using one or more sensors or one or more user input devices, raw user data representative of the user during the current interaction session;
obtaining (S101) raw environmental data representative of the current environment; and
obtaining the current user data and the current environmental data based on the raw user data and the raw environmental data, respectively, wherein the raw environmental data is obtained by using one or more sensors, or is received from one or more devices acting upon the current environment.

4. The method according to claim 3, wherein obtaining the current user data based on the raw user data comprises:
deriving (S102A, S102B, S102C), using a machine learning model, data identifying an emotional state, an affective display, or a physiological state of the user based on the raw user data; and
obtaining the current user data by transforming (S103) the data identifying the emotional state, the affective display, or the physiological state of the user to a natural language description or a part of a natural language description.

5. The method according to claim 3 or 4, wherein obtaining the current environmental data comprises: obtaining (S102D, S102E), based on the raw environmental data, a scene graph of a scene the user faces during the current interaction session or data representing an acoustic event occurring in the current environment; and obtaining the current environmental data by transforming (S103) the scene graph or the data representing the acoustic event to a natural language description or a part of a natural language description; or
wherein the raw environmental data is obtained by using a camera or a microphone directed to the current environment.

6. The method according to any one of the claims 1 to 5, wherein determining (S106) whether the current state of the user is a negative state based on the current user data comprises:
determining the current state of the user based on the current user data and the current environmental data, or,
determining whether the current state of the user is a negative state using a sentiment analysis technique.

7. The method according to any one of the claims 1 to 6, further comprising a step of:
determining, by using the language model, one or more contributing factors to the current state of the user based on the current user data or the current environmental data; or,
prior to determining (S106) whether the current state of the user is a negative state based on the current user data, further comprising:
receiving (S105) the current user data and the current environmental data.

8. The method according to any one of the claims 1 to 7, wherein obtaining the data representing the environmental condition comprises:
formulating (S107B), using the language model, a query based on the current state of the user;
sending (S108B) the query to a database storing the data associated with the past interaction session; and
receiving (S108B) the data representing the environmental condition from the database in response to the query.

9. The method according to any one of the claims 1 to 8, further comprising a step of:
storing (S104) data associated with the current interaction session into a database, wherein the data associated with the current interaction session comprises the current user data and the current environmental data, or, data representing the current state of the user, or, data identifying one or more contributing factors to the current state of the user.

10. The method according to any one of the claims 1 to 9, further comprising steps of:
obtaining, from the data associated with the past interaction session, data representing an action of the user that contributes to the target state of the user; and
generating, by using the language model, a message to be rendered for the user, the message comprising a suggestion on the action.

11. The method according to any one of the claims 1 to 10, further comprising a step of:
determining, by using the language model, a personality of the user based on the data associated with the past interaction session, wherein the action to be performed by the device is determined further based on the determined personality.

12. The method according to any one of the claims 1 to 11, wherein determining (S106), by using the language model, whether the current state of the user is a negative state based on the current user data comprises:
transmitting to the language model the current user data, and one or more prompts for guiding the language model to determine whether the current state of the user is a negative state based on the current user data; and
receiving, from the language model, the result of the determining step (S106).

13. A computer program product, comprising instructions which, when executed by one or more processors (301), cause the one or more processors (301) to perform the method according to any one of the claims 1 to 12.

14. A computing system (300), comprising:
one or more processors (301); and
one or more computer-readable storage media (302) storing the computer program product according to claim 13.

15. A computer-readable storage medium, storing the computer program product according to claim 13.

## Patentansprüche

1. Mensch-Maschine-Interaktionsverfahren (100), implementiert durch ein Computersystem (300), das Verfahren umfassend folgende Schritte:
Bestimmen (S106), unter Verwendung eines Sprachmodells, ob ein aktueller Zustand eines Benutzers ein negativer Zustand ist, basierend auf aktuellen Benutzerdaten, die einer oder mehreren physischen Aktionen des Benutzers während einer aktuellen Interaktionssitzung zwischen dem Benutzer und einer Maschine assoziiert sind;
wenn ein Resultat des Schritts des Bestimmens (S106) angibt, dass der aktuelle Zustand des Benutzers ein negativer Zustand ist, Durchführen folgender Schritte:
- Erlangen, aus Daten, die mit einer vergangenen Interaktionssitzung zwischen dem Benutzer und einer Maschine assoziiert sind, von Daten, die eine Umgebungsbedingung darstellen, die zu einem Zielzustand des Benutzers beiträgt, der sich von dem aktuellen Zustand unterscheidet;
- Bestimmen (S109B), unter Verwendung des Sprachmodells, einer durch eine Vorrichtung in einer aktuellen Umgebung, in der sich der Benutzer während der aktuellen Interaktionssitzung befindet, auszuführenden Aktion, um die Umgebungsbedingung basierend auf aktuellen Umgebungsdaten, die mit der aktuellen Umgebung assoziiert sind, zu erreichen oder anzunähern, wobei der Schritt (S109B) eines Bestimmens der Aktion Folgendes umfasst: Verwenden des Sprachmodells, um zu bestimmen, dass die Umgebungsbedingung basierend auf den aktuellen Umgebungsdaten erreichbar ist oder angenähert werden kann, und Priorisieren der Umgebungsbedingung basierend auf einer Wahrscheinlichkeit dafür, dass sie zu dem Zielzustand des Benutzers beiträgt; und
- Senden (S110B) eines Befehls, um die Vorrichtung zum Durchführen der Aktion zu aktivieren.

2. Verfahren nach Anspruch 1, wobei:
- das Sprachmodell ein Modell künstlicher Intelligenz ist, das unter Verwendung von Deep-Learning-Techniken entwickelt worden ist; oder
- die aktuellen Benutzerdaten oder die aktuellen Umgebungsdaten in einer natürlichsprachlichen Beschreibung der aktuellen Interaktionssitzung beinhaltet sind, oder die mit der vergangenen Interaktionssitzung assoziierten Daten eine natürlichsprachliche Beschreibung der vergangenen Interaktionssitzung sind; oder
- die aktuellen Benutzerdaten Folgendes umfassen:
∘ Inhalt einer von dem Benutzer eingegebenen verbalen Nachricht,
∘ Daten, die einen aus einem Ausdrucksverhalten des Benutzers abgeleiteten emotionalen Zustand darstellen,
∘ Daten, die einen physiologischen Zustand des Benutzers darstellen,
∘ Daten, die eine von dem Benutzer gezeigte affektive Äußerung darstellen, oder
∘ Daten, die eine vom Benutzer ausgeführte physische Aktion darstellen; oder
- die aktuellen Umgebungsdaten Daten umfassen, die Folgendes darstellen:
∘ eine physische Aktion, eine Position, einen Zustand oder eine Trajektorie eines Objekts in der aktuellen Umgebung,
∘ ein in der aktuellen Umgebung auftretendes Ereignis, oder
∘ eine Bedingung der aktuellen Umgebung.

3. Verfahren nach Anspruch 1 oder 2, ferner umfassend:
Erlangen (S101), unter Verwendung eines oder mehrerer Sensoren oder einer oder mehrerer Benutzereingabevorrichtungen, von rohen Benutzerdaten, die den Benutzer während der aktuellen Interaktionssitzung darstellen;
Erlangen (S101) von rohen Umgebungsdaten, die die aktuelle Umgebung darstellen; und
Erlangen der aktuellen Benutzerdaten und der aktuellen Umgebungsdaten basierend auf den rohen Benutzerdaten beziehungsweise den rohen Umgebungsdaten, wobei die rohen Umgebungsdaten unter Verwendung eines oder mehrerer Sensoren erlangt oder von einer oder mehreren Vorrichtungen empfangen werden, die auf die aktuelle Umgebung einwirken.

4. Verfahren nach Anspruch 3, wobei ein Erlangen der aktuellen Benutzerdaten basierend auf den rohen Benutzerdaten Folgendes umfasst:
Ableiten (S102A, S102B, S102C), unter Verwendung eines Modells maschinellen Lernens, von Daten, die einen emotionalen Zustand, eine affektive Äußerung oder einen physiologischen Zustand des Benutzers identifizieren, basierend auf den rohen Benutzerdaten; und
Erlangen der aktuellen Benutzerdaten durch Umwandeln (S103) der Daten, die den emotionalen Zustand, die affektive Äußerung oder den physiologischen Zustand des Benutzers identifizieren, in eine natürlichsprachliche Beschreibung oder einen Teil einer natürlichsprachlichen Beschreibung.

5. Verfahren nach Anspruch 3 oder 4, wobei das Erlangen der aktuellen Umgebungsdaten Folgendes umfasst:
Erlangen (S102D, S102E), basierend auf den rohen Umgebungsdaten, eines Szenengraphen einer Szene, der der Benutzer während der aktuellen Interaktionssitzung zugewandt ist, oder von Daten, die ein in der aktuellen Umgebung auftretendes akustisches Ereignis darstellen; und Erlangen der aktuellen Umgebungsdaten durch Umwandeln (S103) des Szenengraphen oder der das akustische Ereignis darstellenden Daten in eine natürlichsprachliche Beschreibung oder einen Teil einer natürlichsprachlichen Beschreibung; oder
wobei die rohen Umgebungsdaten unter Verwendung einer auf die aktuelle Umgebung gerichteten Kamera oder eines auf die aktuelle Umgebung gerichteten Mikrofons erlangt werden.

6. Verfahren nach einem der Ansprüche 1 bis 5, wobei ein Bestimmen (S106), ob der aktuelle Zustand des Benutzers basierend auf den aktuellen Benutzerdaten ein negativer Zustand ist, Folgendes umfasst:
Bestimmen des aktuellen Zustands des Benutzers basierend auf den aktuellen Benutzerdaten und den aktuellen Umgebungsdaten oder
Bestimmen, ob der aktuelle Zustand des Benutzers ein negativer Zustand ist, unter Verwendung einer Sentiment-Analysetechnik.

7. Verfahren nach einem der Ansprüche 1 bis 6, ferner umfassend einen folgenden Schritt:
Bestimmen, unter Verwendung des Sprachmodells, eines oder mehrerer zu dem aktuellen Zustand des Benutzers beitragender Faktoren basierend auf den aktuellen Benutzerdaten oder den aktuellen Umgebungsdaten; oder
vor einem Bestimmen (S106), ob der aktuelle Zustand des Benutzers basierend auf den aktuellen Benutzerdaten ein negativer Zustand ist, ferner umfassend:
Empfangen (S105) der aktuellen Benutzerdaten und der aktuellen Umgebungsdaten.

8. Verfahren nach einem der Ansprüche 1 bis 7, wobei ein Erlangen der die Umgebungsbedingung darstellenden Daten Folgendes umfasst:
Formulieren (S107B), unter Verwendung des Sprachmodells, einer Abfrage basierend auf dem aktuellen Zustand des Benutzers;
Senden (S108B) der Abfrage an eine Datenbank, welche die mit der vergangenen Interaktionssitzung assoziierten Daten speichert; und
Empfangen (S108B) der die Umgebungsbedingung darstellenden Daten von der Datenbank als Antwort auf die Abfrage.

9. Verfahren nach einem der Ansprüche 1 bis 8, ferner umfassend einen folgenden Schritt:
Speichern (S104) von Daten, die mit der aktuellen Interaktionssitzung assoziiert sind, in einer Datenbank, wobei die mit der aktuellen Interaktionssitzung assoziierten Daten die aktuellen Benutzerdaten und die aktuellen Umgebungsdaten oder Daten, die den aktuellen Zustand des Benutzers darstellen, oder Daten, die einen oder mehrere zum aktuellen Zustand des Benutzers beitragende Faktoren identifizieren, umfassen.

10. Verfahren nach einem der Ansprüche 1 bis 9, ferner umfassend folgende Schritte:
Erlangen von Daten, die eine Aktion des Benutzers darstellen, die zu dem Zielzustand des Benutzers beiträgt, aus den Daten, die mit der vergangenen Interaktionssitzung assoziiert sind; und
Erzeugen, unter Verwendung des Sprachmodells, einer für den Benutzer wiederzugebenden Nachricht, wobei die Nachricht einen Vorschlag in Bezug auf die Aktion umfasst.

11. Verfahren nach einem der Ansprüche 1 bis 10, ferner umfassend einen folgenden Schritt:
Bestimmen, unter Verwendung des Sprachmodells, einer Persönlichkeit des Benutzers basierend auf den Daten, die mit der vergangenen Interaktionssitzung assoziiert sind, wobei die durch die Vorrichtung durchzuführende Aktion ferner basierend auf der bestimmten Persönlichkeit bestimmt wird.

12. Verfahren nach einem der Ansprüche 1 bis 11, wobei ein Bestimmen (S106), unter Verwendung des Sprachmodells, ob der aktuelle Zustand des Benutzers basierend auf den aktuellen Benutzerdaten ein negativer Zustand ist, Folgendes umfasst:
Übertragen, an das Sprachmodell, der aktuellen Benutzerdaten und einer oder mehrerer Aufforderungen zum Anleiten des Sprachmodells, um zu bestimmen, ob der aktuelle Zustand des Benutzers ein negativer Zustand ist, basierend auf den aktuellen Benutzerdaten; und
Empfangen, von dem Sprachmodell, des Resultats des Bestimmungsschritts (S106).

13. Computerprogrammprodukt, umfassend Anweisungen, die, wenn sie von einem oder mehreren Prozessoren (301) ausgeführt werden, den einen oder die mehreren Prozessoren (301) veranlassen, das Verfahren nach einem der Ansprüche 1 bis 12 durchzuführen.

14. Computersystem (300), umfassend:
einen oder mehrere Prozessoren (301); und
ein oder mehrere computerlesbare Speichermedien (302), die das Computerprogrammprodukt nach Anspruch 13 speichern.

15. Computerlesbares Speichermedium, das das Computerprogrammprodukt nach Anspruch 13 speichert.

## Revendications

1. Procédé d'interaction homme-machine (100) mis en œuvre par un système informatique (300), le procédé comprenant des étapes suivantes :
déterminer (S106), à l'aide d'un modèle de langage, si un état actuel d'un utilisateur est un état négatif, sur la base de données utilisateur actuelles associées à une ou plusieurs actions physiques de l'utilisateur pendant une session d'interaction actuelle entre l'utilisateur et une machine ;
si le résultat de l'étape de détermination (S106) indique que l'état actuel de l'utilisateur est un état négatif, exécuter les étapes suivantes comprenant le fait de :
- obtenir, à partir de données associées à une session d'interaction passée entre l'utilisateur et une machine, des données représentant une condition environnementale contribuant à un état cible de l'utilisateur qui est différent de l'état actuel ;
- déterminer (S109B), à l'aide du modèle de langage, une action devant être exécutée par un dispositif dans un environnement actuel où se trouve l'utilisateur pendant la session d'interaction actuelle, afin d'atteindre ou d'approcher la condition environnementale sur la base de données environnementales actuelles associées à l'environnement actuel, dans lequel l'étape (S109B) de détermination de l'action comprend le fait de : utiliser le modèle de langage pour déterminer que la condition environnementale est réalisable ou peut être approchée sur la base des données environnementales actuelles, et prioriser la condition environnementale sur la base d'une probabilité qu'elle contribue à l'état cible de l'utilisateur ; et
- envoyer (S110B) une instruction permettant au dispositif d'exécuter l'action.

2. Procédé selon la revendication 1, dans lequel :
- le modèle de langage est un modèle d'intelligence artificielle qui a été mis au point à l'aide de techniques d'apprentissage profond ; ou
- les données utilisateur actuelles ou les données environnementales actuelles sont incluses dans une description en langage naturel de la session d'interaction actuelle, ou les données associées à la session d'interaction passée constituent une description en langage naturel de la session d'interaction passée ; ou
- les données utilisateur actuelles comprennent :
∘ le contenu d'un message verbal saisi par l'utilisateur,
∘ des données représentant un état émotionnel dérivé d'un comportement expressif de l'utilisateur,
∘ des données représentant un état physiologique de l'utilisateur,
∘ des données représentant une manifestation affective présentée par l'utilisateur, ou
∘ des données représentant une action physique exécutée par l'utilisateur ; ou
- les données environnementales actuelles comprennent des données représentant :
∘ une action physique, un emplacement, un état ou une trajectoire d'un objet dans l'environnement actuel,
∘ un événement se produisant dans l'environnement actuel, ou
∘ une condition de l'environnement actuel.

3. Procédé selon la revendication 1 ou 2, comprenant en outre le fait de :
obtenir (S101), à l'aide d'un ou plusieurs capteurs ou d'un ou plusieurs dispositifs d'entrée utilisateur, des données utilisateur brutes représentatives de l'utilisateur pendant la session d'interaction actuelle ;
obtenir (S101) des données environnementales brutes représentatives de l'environnement actuel ; et
obtenir les données utilisateur actuelles et les données environnementales actuelles, sur la base des données utilisateur brutes et des données environnementales brutes, respectivement, les données environnementales brutes étant obtenues à l'aide d'un ou plusieurs capteurs, ou étant reçues en provenance d'un ou plusieurs dispositifs agissant sur l'environnement actuel.

4. Procédé selon la revendication 3, dans lequel l'obtention des données utilisateur actuelles sur la base des données utilisateur brutes comprend le fait de :
dériver (S102A, S102B, S102C), à l'aide d'un modèle d'apprentissage automatique, des données identifiant un état émotionnel, une manifestation affective ou un état physiologique de l'utilisateur, sur la base des données utilisateur brutes ; et
obtenir les données utilisateur actuelles en transformant (S103) les données identifiant l'état émotionnel, la manifestation affective ou l'état physiologique de l'utilisateur en une description en langage naturel ou en une partie d'une description en langage naturel.

5. Procédé selon la revendication 3 ou 4, dans lequel l'obtention des données environnementales actuelles comprend le fait de :
obtenir (S102D, S102E), sur la base des données environnementales brutes, un graphe de scène d'une scène à laquelle l'utilisateur fait face pendant la session d'interaction actuelle ou des données représentant un événement acoustique se produisant dans l'environnement actuel ; et
obtenir les données environnementales actuelles en transformant (S103) le graphe de scène ou les données représentant l'événement acoustique en une description en langage naturel ou en une partie d'une description en langage naturel ; ou
les données environnementales brutes étant obtenues à l'aide d'une caméra ou d'un microphone orienté vers l'environnement actuel.

6. Procédé selon l'une quelconque des revendications 1 à 5, dans lequel l'étape consistant à déterminer (S106) si l'état actuel de l'utilisateur est ou non un état négatif, sur la base des données utilisateur actuelles, comprend le fait de :
déterminer l'état actuel de l'utilisateur, sur la base des données utilisateur actuelles et des données environnementales actuelles, ou
déterminer si l'état actuel de l'utilisateur est un état négatif, à l'aide d'une technique d'analyse des sentiments.

7. Procédé selon l'une quelconque des revendications 1 à 6, comprenant en outre une étape comprenant le fait de :
déterminer, à l'aide du modèle de langage, un ou plusieurs facteurs contribuant à l'état actuel de l'utilisateur, sur la base des données utilisateur actuelles ou des données environnementales actuelles ; ou
avant de déterminer (S106) si l'état actuel de l'utilisateur est un état négatif, sur la base des données utilisateur actuelles, comprenant en outre le fait de :
recevoir (S105) les données utilisateur actuelles et les données environnementales actuelles.

8. Procédé selon l'une quelconque des revendications 1 à 7, dans lequel l'obtention des données représentant la condition environnementale comprend le fait de :
formuler (S107B), à l'aide du modèle de langage, une requête sur la base de l'état actuel de l'utilisateur ;
envoyer (S108B) la requête à une base de données qui stocke les données associées à la session d'interaction passée ; et
recevoir (S108B), en réponse à la requête, les données représentant la condition environnementale, en provenance de la base de données.

9. Procédé selon l'une quelconque des revendications 1 à 8, comprenant en outre une étape comprenant le fait de :
stocker (S104) des données associées à la session d'interaction actuelle dans une base de données, les données associées à la session d'interaction actuelle comprenant les données utilisateur actuelles et les données environnementales actuelles, ou des données représentant l'état actuel de l'utilisateur, ou des données identifiant un ou plusieurs facteurs contribuant à l'état actuel de l'utilisateur.

10. Procédé selon l'une quelconque des revendications 1 à 9, comprenant en outre des étapes comprenant le fait de :
obtenir, à partir des données associées à la session d'interaction passée, des données représentant une action de l'utilisateur qui contribue à l'état cible de l'utilisateur ; et
générer, à l'aide du modèle de langage, un message devant être présenté à l'utilisateur, le message comprenant une suggestion concernant l'action.

11. Procédé selon l'une quelconque des revendications 1 à 10, comprenant en outre une étape comprenant le fait de :
déterminer, à l'aide du modèle de langage, une personnalité de l'utilisateur, sur la base des données associées à la session d'interaction passée, l'action devant être exécutée par le dispositif étant en outre déterminée sur la base de la personnalité déterminée.

12. Procédé selon l'une quelconque des revendications 1 à 11, dans lequel l'étape consistant à déterminer (S106), à l'aide du modèle de langage, si l'état actuel de l'utilisateur est ou non un état négatif, sur la base des données utilisateur actuelles, comprend le fait de :
transmettre, au modèle de langage, les données utilisateur actuelles, et une ou plusieurs invites destinées à guider le modèle de langage afin qu'il détermine si l'état actuel de l'utilisateur est ou non un état négatif, sur la base des données utilisateur actuelles ; et
recevoir, en provenance du modèle de langage, le résultat de l'étape de détermination (S106).

13. Produit-programme informatique, comprenant des instructions qui, lorsqu'elles sont exécutées par un ou plusieurs processeurs (301), amènent le ou les processeurs (301) à mettre en œuvre le procédé selon l'une quelconque des revendications 1 à 12.

14. Système informatique (300), comprenant :
un ou plusieurs processeurs (301) ; et
un ou plusieurs supports de stockage lisibles par ordinateur (302) stockant le produit-programme informatique selon la revendication 13.

15. Support de stockage lisible par ordinateur, stockant le produit-programme informatique selon la revendication 13.
